# DEMANDE DE BREVET EUROPEEN

(11) **EP 0 668 121 A1**
(43) Date de publication de la demande: **23.08.1995**
(21) Numéro de dépôt: 95400311.7
(22) Date de dépôt: 15.02.1995
(51) Int. Cl.: B23K 26/14

(54) **Tête de soudage au laser à buse améliorée**

(30) Priorité: 16.02.1994 FR 9401733
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Goutines, Marius Jean-Marie, F-77000 Melun (FR); Loreau, Jean-Yves, F-94320 Thiais (FR); Zanolin, Gérard Louis, F-91490 Oncy sur Ecole (FR)

(57) **Abrégé**

Une tête de soudage LASER comporte une buse (10) à diamètre d de sortie très réduit, d valant 2,5 mm pour un faisceau LASER (6) CO₂ d'une longueur focale de 150 mm et présentant une surface interne (11) conique, le demi-angle a au sommet valant 15 degrés pour le faisceau (6) et l'état de surface étant aussi bon que Ra 0,8, la zone de sortie présentant un rayonnage r proche du double du diametre d.

## Description

La présente invention concerne une tête de soudage LASER munie d'une buse de soudage assurant un fonctionnement amélioré.

Il est connu en soi d'utiliser dans les équipements de soudage LASER une buse de soudage dont le rôle est notamment d'amener un gaz d'assistance au droit du bain de fusion dans la zone soudée et entourant le faisceau LASER qui traverse également ladite buse. Le gaz utilisé est un gaz neutre, par exemple argon.

Des exemples de telles buses reliées à une amenée de gaz sont décrits par EP-A-0330565, US-A-4804815 et US-A-4952770. Dans ces dispositifs connus antérieurs, des dispositifs complémentaires ont souvent dû être adjoints. Ainsi EP-A-0330565 prévoit un éjecteur couvrant la zone de travail et entourant la buse proprement dite. Le soudage LASER s'accompagne en général de la formation d'un plasma en surface du bain de fusion. Ce plasma s'il n'est pas stable perturbe grandement le soudage, ce qui nuit à la qualité des résultats et affecte notamment leur répétitivité. De plus le plasma fait écran au faisceau, ce qui limite les capacités du procédé. On est ainsi souvent amené à adjoindre à l'équipement de soudage des systèmes dits "chasse-plasma", servant à supprimer par soufflage le plasma se situant au dessus du bain de fusion. EP.A-0474557 illustre un exemple de mise en oeuvre d'un tel système de soufflage de gaz, disposé à l'extérieur de la buse de soudage proprement dite et à proximité de la zone de travail. On a relevé dans ce cas que pour certaines applications pour lesquelles les exigences de qualité sont élevées, il s'avère impossible de souffler du gaz sur le bain de fusion par le porte-buse de soudage avec de bons résultats. Toutefois, l'utilisation d'un système de chasse-plasma demeure très souvent pénalisante en ce qui concerne l'accessibilité aux zones à souder, en particulier lorsque l'on doit opérer des changements de direction dans un même plan pour réaliser une soudure (par exemple soudure de pièces rectangulaire dans un plan).
L'invention porte sur une tête de soudage LASER répondant à ces conditions de manière satisfaisante sans les inconvénients des solutions connues antérieures comportant une buse de soudage caractérisée par un diamètre d de sortie très réduit et d'une valeur de 2,5mm dans le cas d'un faisceau LASER CO₂ d'une longueur focale de 150 mm, par une surface interne conique à demi-angle a au sommet de quinze degrés, par une zone de sortie présentant un rayonnage de rayon r proche du double du diamètre d de sortie de la buse, soit dans le cas dudit faisceau LASER, d'une valeur de 4mm pour un diamètre de sortie de 2,5mm et par un bon état de surface interne d'une valeur de Ra 0,8.

Avantageusement, la tête de soudage est fermée à sa partie supérieure par une lentille plane et le gaz protecteur est injecté sous ladite lentille et à sa proximité immédiate.

D'autres caractéristiques et avantages de l'invention seront mieux compris à la lecture de la description qui va suivre d'un mode de réalisation de l'invention, en référence aux dessins annexés sur lesquels :
- la figure 1 représente une vue schématique en coupe par un plan contenant l'axe géométrique du faisceau LASER d'une tête de soudage LASER conforme à l'invention ;
- la figure 2 représente selon une vue analogue à celle de la figure 1 et à une échelle agrandie une buse de soudage conforme à l'invention et faisant partie de ladite tête de soudage LASER.

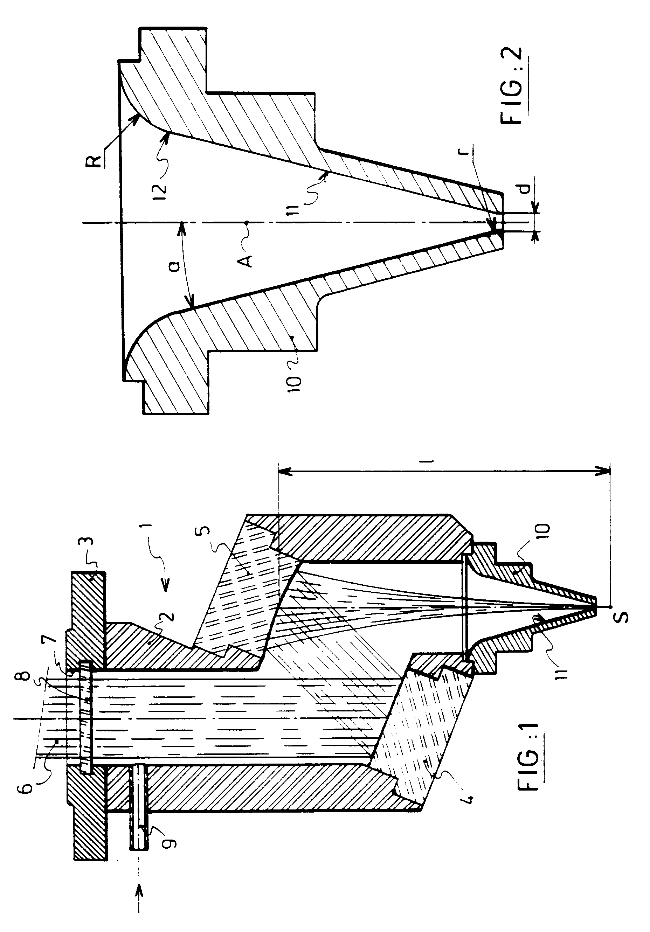

Une tête de soudage LASER 1 conforme à l'invention et telle que schématiquement représentée sur la figure 1 comporte, de manière classique, un corps 2 et une bride supérieure 3 de mise en place. Sur ce corps 2 sont montés, comme il est connu, un miroir de renvoi 4 et un miroir de focalisation 5 dirigeant le faisceau LASER 6 qui pénètre dans la tête de soudage par un alésage 7 ménagé sur ladite bride supérieure 3.

De manière remarquable et conforme à l'invention, une lentille plane ou fenêtre 8 est montée sur le trajet du faisceau LASER 6 qui la traverse, à l'intérieur de l'alésage 7 de ladite bride supérieure 3 et à proximité immédiate, juste sous ladite fenêtre 8, une arrivée 9 est ménagée sur ledit corps 2, raccordé à une alimentation en gaz neutre, par exemple argon.

Le corps 2 porte enfin, entourant la sortie du faisceau LASER 6, une buse de soudage 10 dont la surface interne présente une géométrie particulière, conforme à l'invention. La forme générale de ladite surface interne 19 est conique et le diamètre de sortie est fortement réduit, la zone de sortie présentant un rayonnage dont le rayon vaut environ le double du diamètre de sortie. Dans l'exemple de réalisation représenté sur les dessins et compte-tenu des caractéristiques du faisceau LASER utilisé et adaptées aux applications de soudage envisagées, le diamètre d de sortie de la buse 10 est de 2,5mm tandis que le rayon r de la zone de sortie est de 4mm, le demi-angle a au sommet de cône de la surface interne 11 étant de quinze degrés. La base 12 de la surface interne 11 conique de la buse 10 se raccorde à la surface interne du corps 2 par un rayonnage R, évitant l'apparition de turbulences dans l'écoulement. Dans l'exemple de réalisation décrit le faisceau LASER utilisé présente une longueur focale 1, telle que représentée sur la figure 1 au point S de focalisation sur la zone à souder, d'une valeur de 150 mm et la source utilisée est une source CO₂.

Dans tous les cas, le diamètre d de sortie de la buse est fortement réduit et sa valeur est déterminée en fonction du faisceau LASER utilisé, notamment son diamètre. Le rayon r de la zone de sortie de buse présentant un rayonnage est déterminé proche du double du diamètre d de sortie de buse. La valeur du demi-angle a de sommet du cône interne de la buse est également déterminée en fonction du faisceau LASER utilisé. Les valeurs indiquées ci-dessus dans le cas de l'exemple de réalisation représenté sur les dessins ont été déterminées expérimentalement pour un faisceau LASER présentant les caractéristiques connues en soi et mises au point pour les applications visées de soudage de pièces de moteurs aéronautiques et notamment des éléments de stator tels que des étages de redresseur ou des bras de structure de stator, notamment de soufflante de turboréacteur.

Ladite tête de soudage au LASER est notamment destinée à tous types de soudure bord à bord ou assemblage en T, nécessitant une qualité importante et un contrôle de la qualité en terme de soufflures.

L'obtention de résultats satisfaisants en soudage est assurée au moyen des dispositions conformes à l'invention qui viennent d'être décrites en références aux dessins. L'efficacité de l'amenée de gaz d'assistance au droit du bain de fusion est notamment obtenue grâce au contrôle de plusieurs paramètres. La forme conique de la surface interne 11 de la buse 10 et la forme de sortie de buse assurent la direction du gaz et permettent à l'écoulement d'être éjecté parallèlement à l'axe géométrique A de la buse avec un niveau de turbulence minimale. Le choix de la pression d'alimentation du gaz et la définition géométrique des surfaces internes de la tête de soudage permettent de contrôler la vitesse de sortie du gaz dépendant de la pression à l'intérieur de la tête de soudage. Un effet important est d'obtenir la stabilité du plasma développé en surface du bain de fusion qui est une condition essentielle pour assurer la qualité du soudage avec des résultats répétitifs. Cet effet est obtenu par la réduction du diamètre d de sortie de buse et en évitant toute turbulence dans l'écoulement du gaz. La stabilité du jet de gaz et notamment l'absence de turbulences sont dues à la forme des surfaces intérieures de la buse et à la qualité, au bon état de surface de la surface intérieure 11 de la buse 10. Un état de surface de valeur Ra au moins aussi bonne que 0,8 a ainsi été obtenu dans l'exemple de réalisation décrit ci-dessus.

Un avantage important obtenu grâce à la buse conforme à l'invention est également de stabiliser avec une très grande fiabilité le plasma du bain de fusion sans nécessiter, comme dans certains dispositifs connus antérieurs, l'utilisation d'un système dit "chasse-plasma". Une meilleure accessibilité aux zones à souder est ainsi assurée et la tête de soudage conforme à l'invention permet une utilisation souple et industrielle.

On relève également que le diamètre d réduit de sortie de la buse 10 facilite une protection efficace des miroirs de la tête de soudage contre les projections de métal fondu et les remontées de fumée, provenant du bain de soudage. L'utilisation de la lentille plane ou fenêtre 8 et la disposition d'injection du gaz juste sous la fenêtre 8 favorisent également l'obtention d'un écoulement non turbulent à la sortie de buse. La qualité de l'écoulement est en outre améliorée grâce à la disposition de l'arrivée 9 du gaz à la partie supérieure du corps 2.

La qualité répétitive des cordons de soudure obtenus en fabrication de pièces de moteurs aéronautiques a montré les avantages des dispositions conformes à l'invention. On note en outre que ces dispositions sont appliquées à divers équipements de soudage LASER, notamment suivant des procédés utilisant des sources de faisceau LASER de nature différente, notamment l'application a été réalisée à des procédés de soudage à source LASER CO₂ et à SOURCE LASER YAG.

## Revendications

1. Tête de soudage au LASER comportant une buse (10) de soudage à la sortie de laquelle le faisceau LASER atteint la zone à souder caractérisée en ce que ladite buse (10) comporte un diamètre d de sortie très réduit et d'une valeur de 2,5mm dans le cas d'un faisceau LASER (6) CO₂ d'une longueur focale l de 150 mm, une surface interne (11) conique à demi-angle a au sommet, d'une valeur de quinze degrés dans le cas dudit faisceau LASER (6) et une zone de sortie présentant un rayonnage de rayon r proche du double du diamètre d de sortie, r valant 4mm dans le cas dudit faisceau LASER (6), la surface interne (11) de ladite buse (10) présentant un état de surface au moins aussi bon qu'une valeur de Ra 0,8.

2. Tête de soudage au LASER selon la revendication 1 dans laquelle l'entrée du faisceau LASER (6) est fermée par une lentille plane ou fenêtre (8) et l'arrivée (9) de gaz protecteur est située sous ladite fenêtre (8) et à sa proximité immédiate.
